# EUROPÄISCHE PATENTSCHRIFT

(11) **EP 0 394 384 B1**
(45) Veröffentlichungstag und Bekanntmachung des Hinweises auf die Patenterteilung: **19.05.1993**
(21) Anmeldenummer: 89909180.5
(22) Anmeldetag: 15.07.1989
(51) Int. Cl.: B01D 39/00, B01J 20/28

(54) **VORRICHTUNG ZUR AUFNAHME UND RÄUMLICHEN FESTLEGUNG BESTIMMTER MENGEN VON SCHÜTTMASSEN**
DEVICE FOR CONTAINING AND HOLDING IN POSITION SPECIFIC QUANTITIES OF BULK MATERIAL
DISPOSITIF PERMETTANT DE RECEVOIR DES QUANTITES DETERMINEES DE PRODUITS EN VRAC ET D'EN CALCULER LES DIMENSIONS

(30) Priorität: 26.07.1988 DE 3825334
(43) Veröffentlichungstag der Anmeldung: 31.10.1990
(73) Patentinhaber: Hölter, Heinz, Dipl.-Ing., D-45964 Gladbeck (DE)
(72) Erfinder: HÖLTER, Heinz, D-4390 Gladbeck (DE); IGELBÜSCHER, Heinrich, D-4390 Gladbeck (DE); GRESCH, Heinrich, D-4600 Dortmund-Wickede (DE); DEWERT, Heribert, D-4390 Gladbeck (DE)
(74) Vertreter: Spalthoff, Adolf, Dipl.-Ing.
(86) Internationale Anmeldenummer: EP8900827
(87) Internationale Veröffentlichungsnummer: WO9000926

(56) Entgegenhaltungen:
- EP-A- 0 225 593
- BE-A- 897 530
- DE-C- 3 716 476
- FR-A- 2 022 947
- GB-A- 2 198 053
- US-A- 4 250 172

## Beschreibung

Die Erfindung betrifft eine Filtervorrichtung, die zwei miteinander verbundene, eine Filtermatte bildende, fluiddurchlässige Bahnen aufweist, zwischen denen die Filtermassen als Schüttung aufgenommen und räumlich festgelegt werden, wobei eine der Bahnen so ausgeführt ist, daß sich über ihre Oberfläche verteilt kissenartige Erhebungen ausbilden, welche durch in Längs- und Querrichtung dieser Bahn verlaufende, einander kreuzende Verbindungsstege begrenzt sind, welche an der anderen Bahn befestigt sind.

Die EP-A-0 225 593 zeigt eine Vorrichtung zur Aufnahme und räumlichen Festlegung bestimmter Mengen von Schüttmassen, welche zwei miteinander verbundene, eine Matte bildende Bahnen aufweist, zwischen denen die Schüttmassen eingelagert sind, wobei eine der Bahnen so ausgeführt ist, daß sich über ihre Oberfläche verteilt kissenartige Erhebungen ausbilden.

Es ist bekannt, Sorptions- oder Chemisorptionsmassen zwischen Vliesbahnen unter Bildung von Formkörpern einzulagern, um Filtermatten zu erhalten. Dies geschieht durch Befestigung von zwei, die Schüttmassen aufnehmenden Vliesbahnen, zwischen denen die Filtermassen eingelagert werden. Zur räumlichen Fixierung der Filtermassen sind die Vliesbahnen so miteinander verbunden, daß kleine, kissenförmige Erhebungen entstehen, die eine waffelförmige Struktur aufweisen. Eine so ausgebildete Filtermatte weist damit eine unterschiedliche Schichtdicke über die Oberfläche der Matte auf. Dies hat den Nachteil, daß dann, wenn ein Gas zu Reinigungszwecken durch eine solche Filtermatte strömt, unterschiedliche Verweilzeiten des Gases auftreten, je nachdem, an welcher Stelle die Filtermatte durchströmt wird. Weiterhin findet ein verstärkter Gasdurchtritt an den Stellen mit geringer Füllhöhe sowie an den Verbindungsstellen der beiden Vliesbahnen statt. Derart aufgebaute Filtermatten sind somit nur in geringem Maße geeignet, Schadstoffe mit gutem Abscheidegrad zu binden.

Um diese Nachteile der bekannten Filtermatten zu vermeiden wurden in deren Freiräume zwischen den kissenartigen Erhebungen oberhalb der Verbindungsstege Formkörper eingebracht oder aber in diese Bereiche vorgeformte Kunststoffgitter eingelegt. Diese Maßnahmen bedingen aber einen vergleichsweise großen Mehraufwand, dessen Wirkungen weiterhin unbefriedigend sind. Außerdem wird die effektive Filterfläche wesentlich gegenüber der zur Verfügung stehenden Fläche verkleinert. Auch ist das pro Raumeinheit unterzubringende Kontaktvolumen reduziert. Ein weiterer Nachteil dieser Filtermatten mit waffelförmiger Struktur ist darin zu sehen, daß zur Aufrechterhaltung der geometrischen Form, insbesondere im eingebauten Zustand, die beiden Vliesbahnen sehr steif ausgebildet sein müssen, da bei einer Verformung Hohlräume entstehen können, die zu Gasdurchbrüchen führen können.

Von diesem Stand der Technik ausgehend liegt der Erfindung die Aufgabe zugrunde, unter Vermeidung vorerwähnter Nachteile eine Filtervorrichtung der eingangs genannten Art zu schaffen, welche nicht nur in einfacher Weise herzustellen und anzuwenden ist, sondern darüber hinaus eine dauerhafte Aufnahme und räumliche Festlegung bestimmter Mengen von Filtermassen als Schüttung gewährleistet.

Gemäß der Erfindung wird dies dadurch erreicht, daß die Filtervorrichtung jeweils aus zwei Filtermatten besteht, welche um 180 Grad zueinander gedreht derart aufeinander angeordnet sind, daß die kissenartigen Erhebungen der einen Bahn der ersten Filtermatte sich in die von den Verbindungsstegen gebildeten Zwischenräume der zweiten Filtermatte erstrecken und formschlüssig einfügen, welche entsprechend den kissenartigen Erhebungen als Vertiefungen gestaltet sind und die beiden Filtermatten gemeinsam eine Schüttschicht von gleichmäßiger Dicke bilden. Die beiden Filtermatten liegen auf diese Weise mit ihren Erhebungen und Vertiefungen formschlüssig und bündig ineinander, so daß sich ein völlig gleicher Querschnitt über die ganze Vorrichtung ergibt.

Gemäß einem weiteren Merkmal der Erfindung bestehen die Bahnen der beiden Filtermatten aus Vliesbahnen. Als Filtermassen dienen vorzugsweise Sorptions- oder Chemisorptionsmassen. In dieser Anwendung ergibt sich eine außerordentlich vorteilhafte, hochwirksame Filtervorrichtung, da die spiegelbildlich zueinander angeordneten und formschlüssig ineinandergelegten Filtermatten insgesamt über ihren Querschnitt gesehen eine gleichmäßig dicke Schicht bilden, so daß durchlässige Stellen oder unterschiedliche Wandstärken ausgeschlossen sind.

Ein weiterer Vorteil besteht darin, daß nur die anderen Bahnen, also die Trägerbahnen, formsteif ausgebildet sein müssen, während die mit den kissenartigen Erhebungen versehenen einen Bahnen aus sehr dünnem, gut gasdurchlässigem und billigem Vliesmaterial gebildet werden können, da sich die Deckvliese im zusammengelegten Zustand der Matten gegenseitig abstützen und damit keinerlei Volumenänderung in den Filterkammern auftreten kann. An jeder Seite der so gebildeten Filtervorrichtung ist somit die gleiche Schichthöhe des Filtermaterials vorhanden.

Ein Ausführungsbeispiel der Erfindung ist anhand der Figuren näher erläutert, die eine erfindungsgemäße Vorrichtung aus zwei ineinandergelegten Filtermatten zeigt.

Mit 1 ist eine Vliesbahn bezeichnet, welche mit symmetrisch über ihre Oberfläche verteilt angeordneten kissenartigen Erhebungen 2 versehen ist. Die kissenartigen Erhebungen 2 sind durch in Längs- und Querrichtung dieser Bahn 1 verlaufende, einander kreuzende Verbindungsstege 3 begrenzt. Die Verbindungsstege 3 sind an der anderen Vliesbahn 4, welche die Trägerbahn darstellt, befestigt, beispielsweise durch Schweißung, Klebung, Nadelung usw..

Die kissenartigen Erhebungen 2 sind mit Filtermassen 5 gefüllt. Diese sind innerhalb der kissenartigen Erhebungen 2 durch die kreuz- und querverlaufenden Verbindungsstege 3 räumlich festgelegt.

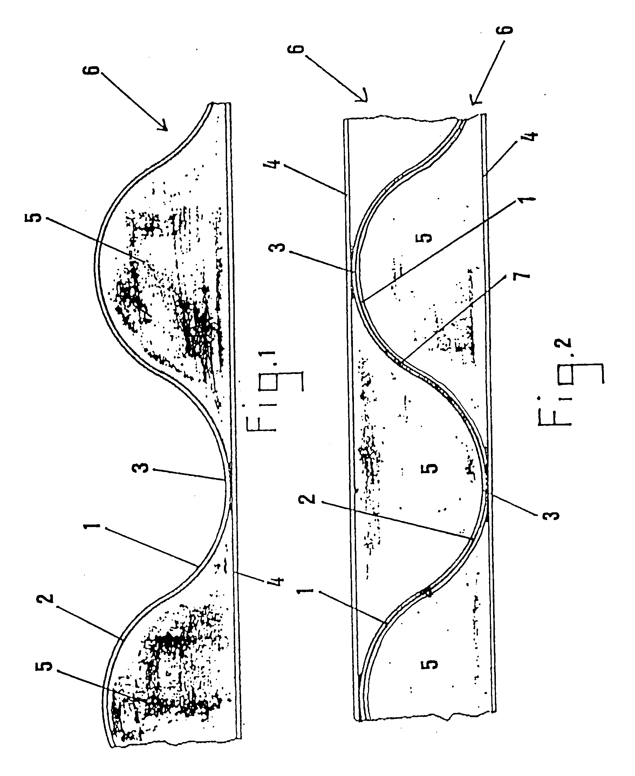

Die so gebildete Filtermatte gemäß Figur 1 ist mit 6 bezeichnet.

Wie aus Figur 2 ersichtlich, wird die Filtervorrichtung durch zwei Filtermatten 6 gemäß Figur 1 gebildet, wobei die Anordnung so getroffen ist, daß diese jeweils um 180 Grad zueinander gedreht aufeinandergelegt sind, wobei die kissenartigen Erhebungen 2 der einen Bahn 1 der ersten Filtermatte 6 sich in die von den Verbindungsstegen 3 gebildeten Zwischenräume der zweiten Filtermatte 6 erstrecken, welche entsprechend den kissenartigen Erhebungen 2 als Vertiefungen 7 gestaltet sind.

## Patentansprüche

1. Filtervorrichtung, die zwei miteinander verbundene, eine Filtermatte (6) bildende, fluiddurchlässige Bahnen (1, 4) aufweist, zwischen denen die Filtermassen (5) als Schüttung aufgenommen und räumlich festgelegt werden, wobei eine (1) der Bahnen (1, 4) so ausgeführt ist, daß sich über ihre Oberfläche verteilt kissenartige Erhebungen (2) ausbilden, welche durch in Längs- und Querrichtung dieser Bahn (1) verlaufende, einander kreuzende Verbindungsstege (3) begrenzt sind, welche an der anderen Bahn (4) befestigt sind, wobei die Filtervorrichtung jeweils aus zwei Filtermatten (6) besteht, welche um 180 Grad zueinander gedreht derart aufeinander angeordnet sind, daß sie kissenartigen Erhebungen (2) der einen Bahn (1) der ersten Filtermatte (6) sich in die von den Verbindungsstegen (3) gebildeten Zwischenräume der zweiten Filtermatte (6) erstrecken und formschlüssig einfügen, welche entsprechend kissenartigen Erhebungen (2) als Vertiefungen (7) gestaltet sind und die beiden Filtermatten (6) gemeinsam eine Schüttschicht von gleichmäßiger Dicke bilden.

2. Vorrichtung nach Anspruch 1, dadurch gekennzeichnet, daß die Bahnen (1, 4) der Filtermatten (6) aus Vliesbahnen bestehen.

3. Vorrichtung nach Anspruch 2, dadurch gekennzeichnet, daß als Filtermassen (5) Sorptions- oder Chemisorptionsmassen dienen.

4. Vorrichtung nach einem der vorhergehenden Ansprüche, dadurch gekennzeichnet, daß die Durchlässigkeit der einen Bahn (1) größer ist als die der anderen Bahn (4).

## Claims

1. Filter device which comprises two fluid-permeable strips (1, 4) which are connected to one another, form a filter mat (6), and between which the filter blocks (5) are accommodated as ballast and are spatially fixed, wherein one (1) of the strips (1, 4) is constructed such that distributed over its surface there are formed cushion-like elevations (2) which are delimited by connection bars (3) which extend in the longitudinal and transverse directions of this strip (1), intersect one another, and are secured on the other strip (4), wherein the filter device in each case comprises two filter mats (6) which are disposed such that they are rotated through 180° relative to one another in such a way that the cushion-like elevations (2) of one strip (1) of the first filter mat (6) extend into the spaces in the second filter mat (6) formed by the connection bars (3) and are secured in these spaces in a positive-locking manner, said spaces being in the form of recesses (7) corresponding to the cushion-like elevations (2), and the two filter mats (6) together form a packed bed of uniform thickness.

2. Device according to Claim 1, characterised in that the strips (1, 4) of the filter mats (6) consist of strips of non-woven material.

3. Device according to Claim 2, characterised in that sorption or chemisorption masses are used as filter blocks (5).

4. Device according to any one of the preceding claims, characterised in that the permeability of one strip (1) is greater than that of the other strip (4).

## Revendications

1. Dispositif de filtration comportant deux bandes (1, 4) perméables aux fluides qui sont liées entre elles et forment une nappe filtrante (6) et entre lesquelles les masses de filtration (5) sont disposées sous forme de produit en vrac et immobilisées spatialement, l'agencement de l'une (1) des bandes (1, 4) étant tel que celle-ci comporte, réparties à sa surface, des renflements (2) en forme de coussins délimités par des cordons (3) qui s'étendent dans la direction longitudinale et dans la direction transversale de la bande (1), se croisent mutuellement et sont reliés à l'autre bande (4), le dispositif de filtration étant constitué par deux nappes filtrantes (6) qui sont disposées l'une sur l'autre en étant tournées de 180 degrés l'une par rapport à l'autre de manière à ce que les renflements (2) en forme de coussins de l'une (1) des bandes de la première nappe filtrante (6) pénètrent et s'adaptent dans les espaces définis par les cordons (3) de la deuxième nappe filtrante (6) et agencés sous forme de cavités (7) correspondant aux renflements (2) en forme de coussins et que les deux nappes filtrantes (6) forment conjointement un lit tassé d'épaisseur constante.

2. Dispositif selon la revendication 1, caractérisé par le fait que les bandes (1, 4) des nappes filtrantes (6) sont constituées par des bandes de non-tissé.

3. Dispositif selon la revendication 2, caractérisé par le fait que l'on utilise comme masses de filtration (5) des agents de sorption ou de chimisorption.

4. Dispositif selon l'une des revendications précédentes, caractérisé par le fait que la perméabilité de l'une des bandes (1) est supérieure à la perméabilité de l'autre bande (4).
